# FASCICULE DE BREVET EUROPEEN

(11) **EP 1 958 870 B1**
(45) Date de publication et mention de la délivrance du brevet: **28.04.2010**
(21) Numéro de dépôt: 08290137.2
(22) Date de dépôt: 13.02.2008
(51) Int. Cl.: B64C 13/04, B64D 31/04, G05G 1/04, G05G 5/16

(54) **Commande manuelle de vol d'aéronef**
Manuelle Flugzeugsteuerung
Manual control of aircraft flight

(30) Priorité: 19.02.2007 FR 0701177
(43) Date de publication de la demande: 20.08.2008
(73) Titulaire: RATIER-FIGEAC, 46101 Figeac (FR)
(72) Inventeur: Antraygue, Cédric, 12200 Villefranche de Rouergue (FR)
(74) Mandataire: Bertrand, Didier

(56) Documents cités:
- GB-A- 129 436
- GB-A- 283 532
- US-A- 3 363 480

## Description

La présente invention se rapporte à une commande de vol d'aéronef pour commander notamment, les gaz, les aérofreins, les becs et volets, ou encore pour commander le palonnier.

Il est connu de remplacer les commandes mécaniques des aéronefs par des commandes électriques et de simuler l'effort mécanique résistant au moyen de dispositif restituant directement sur un organe de pilotage une sensation artificielle de frottement. De tels dispositifs sont d'ailleurs également installés sur les commandes mécaniques lorsqu'elles sont relativement libres, comme par exemple dans GB-A-129436.

Les commandes de vol d'aéronef comprennent généralement un levier d'actionnement manuel, au pied ou à la main, le levier d'actionnement étant monté mobile en rotation sur un support. Les dispositifs permettant de restituer une résistance mécanique au mouvement du levier d'actionnement comprennent généralement des organes de friction, par exemple des disques métalliques montés à frottement les uns contre les autres. L'inconvénient de ces dispositifs réside dans leur évolution au cours du temps. En effet, au fil des mouvements du levier d'actionnement, les disques métalliques tendent à s'user et par conséquent l'effort résistif à évoluer. Par ailleurs, les risques de grippage des disques entre eux sont importants, notamment en atmosphère humide, et le levier d'actionnement se trouve alors bloqué.

D'autres dispositifs, plus complexes, intégrant des moyens électroniques de contrôle permettent de faire varier l'effort résistif en fonction de la position du levier d'actionnement. On pourra notamment se référer au document US 6 644 600, lequel décrit un dispositif de ce type. Le document US 6 242 878 décrit également un appareil de commande électronique équipé d'un organe de commande, des moyens de contrôle pour résister au mouvement de l'organe de commande, et des moyens de détection de force pour détecter la force appliquée sur l'organe de commande et commander lesdits moyens de contrôle.

Un inconvénient de ce type de dispositif est non seulement sa complexité mais aussi son mode d'alimentation. Car, en cas de panne d'alimentation de l'aéronef en courant électrique, il cesse de fonctionner.

Aussi, un problème qui se pose et que vise à résoudre la présente invention est de fournir une commande de vol d'aéronef dont le levier d'actionnement puisse offrir un effort résistif constant dans le temps malgré les mouvements répétés de celui-ci. Par ailleurs, la présente invention vise aussi à éviter que le levier d'actionnement puisse être bloqué.

Dans le but de résoudre ces problèmes, la présente invention propose une commande de vol d'aéronef comprenant un levier d'actionnement manuel et un support, ledit levier d'actionnement manuel étant monté mobile sur ledit support, ladite commande de vol comprenant en outre un premier organe de friction solidaire dudit levier d'actionnement et un second organe de friction solidaire dudit support, lesdits organes de friction comportant chacun au moins une portion d'appui, les portions d'appui desdits organes de friction étant maintenues l'une contre l'autre pour opposer une résistance au mouvement dudit levier d'actionnement par rapport audit support ; selon l'invention, lesdites portions d'appui sont réalisés dans un même type de matériau polymère.

Ainsi, une caractéristique de l'invention réside dans la mise en oeuvre de deux portions réalisées dans un matériau polymère et qui plus est, dans un même type de matériau. Par exemple, des matériaux appartenant à la même famille chimique de matériau. De la sorte, les organes de friction permettent d'appliquer l'une contre l'autre leur portion d'appui respective et ainsi de permettre les mouvements du levier d'actionnement avec un effort résistif donné et constant dans le temps. En effet, contrairement au dispositif incluant des éléments métalliques en frottement les uns contre les autres, les portions d'appui réalisées dans un même matériau polymère ne se grippent pas ni ne s'usent rapidement. Par conséquent, malgré les mouvements répétés du levier d'actionnement, l'effort résistif qu'offrent les organes de friction est relativement constant dans le temps. Par ailleurs, alors que pour les dispositifs métalliques, il est prévu deux pièces de nature différente qui sont entraînées en frottement l'une contre l'autre, de manière à ce que l'une s'use au détriment de l'autre, en utilisant un même matériau pour les deux portions d'appui en frottement, l'usure est la même pour les deux. S'agissant des dispositifs métalliques, il est impossible de prévoir deux pièces d'un même métal au risque de les voir se gripper l'une avec l'autre.

Selon un mode de mise en oeuvre de l'invention particulièrement avantageux, les portions d'appui sont réalisées dans un matériau présentant une faible énergie de surface, par exemple dans un matériau polymère fluoré du type polytétrafluoroéthylène, dont l'état de surface n'est pas altéré au fil des mouvements du levier d'actionnement. Bien évidemment, ces matériaux sont susceptibles de renfermer des charges, des plastifiants ou tout autre additif permettant de faciliter leur mise en oeuvre et surtout leurs performances.

Avantageusement, ledit levier d'actionnement manuel est monté à pivotement sur ledit support, ce qui permet d'obtenir un couple de commande relativement important, et aussi simplifie la mise en oeuvre des organes de friction l'un par rapport à l'autre. On privilégiera ainsi, des organes de friction de symétrie circulaire centrés sur l'axe de rotation du levier d'actionnement. Aussi, ledit premier organe de friction comporte une pièce cylindrique formant un tambour et adaptée à être entraînée en rotation par ledit levier d'actionnement manuel. L'axe de la pièce cylindrique coïncide donc avec l'axe de rotation du levier d'actionnement et par conséquent, la pièce cylindrique en prise avec le levier d'actionnement est entraînée simultanément en rotation.

Selon un premier mode de réalisation de l'invention, ladite portion d'appui dudit premier organe de friction est formée d'une première bande qui est installée selon un périmètre circulaire autour de ladite pièce cylindrique et montée en position fixe à sa périphérie. Ledit second organe de friction comprend lui, avantageusement, une bague apte à entourer ladite pièce cylindrique. Ladite bague présente une surface intérieure circulaire et ladite portion d'appui dudit second organe de friction est formée d'une seconde bande qui recouvre ladite surface intérieure circulaire. De la sorte, la seconde bande vient prendre appui sur la première bande, lesquelles sont respectivement solidaires du support et du levier d'actionnement, de telle sorte que la première bande est entraînée en frottement à l'intérieur de la seconde bande lorsque le levier d'actionnement est entraîné en rotation. Ainsi, l'effort résistif provient essentiellement des deux bandes étendues de façon circulaire l'une contre l'autre.

Avantageusement, ladite bague présente des moyens de serrage pour maintenir en appui ladite seconde bande contre ladite première bande et pour régler l'intensité du couple résistif. Par exemple, la bague est tronquée pour former deux extrémités libres en regard et ces deux extrémités libres sont entraînées à force l'une vers l'autre avec des moyens élastiques.

Selon une alternative, ledit second organe de friction comprend deux sabots diamétralement opposés formant ladite seconde portion d'appui et qui viennent s'appliquer contre la partie cylindrique recouverte de ladite première portion d'appui pour produire un couple d'efforts résistif.

Selon un second mode de réalisation de l'invention, ladite pièce cylindrique présentant un flanc, ladite portion d'appui dudit premier organe de friction est formée d'une plaque en matériau polymère installée sur ledit flanc. Préférentiellement, ladite plaque est découpée en arc de cercle ou en disque et est centrée sur le flanc de la pièce cylindrique par rapport à l'axe de rotation du levier d'actionnement. En outre, ledit second organe de friction comprend préférentiellement un flasque adapté à venir en regard dudit flanc de ladite pièce cylindrique, la portion d'appui dudit second organe de friction étant constituée d'une couronne installée contre ledit flasque, et la couronne, centrée également sur l'axe de rotation du levier d'actionnement, vient en appui contre la plaque en matériau polymère.

Avantageusement, ledit flasque est entraîné par des moyens élastiques vers ledit flanc de manière à porter en appui ladite couronne contre ladite plaque avec une force constante, de façon à assurer un couple résistif constant également.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective montrant une commande de vol d'aéronef conforme à l'invention selon un premier mode de mise en oeuvre ;
- la Figure 2 est une vue schématique en perspective d'un premier élément de détail de la commande illustrée sur la Figure 1 ;
- la Figure 3 est une vue schématique en perspective d'un second élément de détail de la commande illustrée sur la Figure 1 ; et,
- la Figure 4 est une vue schématique d'une commande de vol d'aéronef selon un second mode de mise en oeuvre.

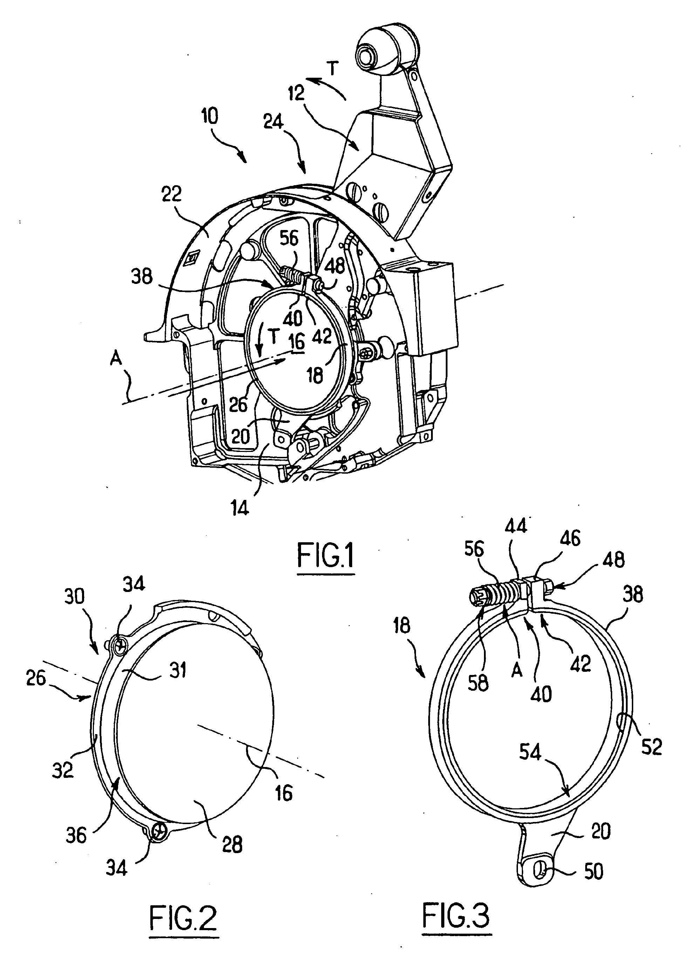

La Figure 1 montre une commande manuelle de vol d'aéronef 10 conforme à l'invention. Elle comporte un levier d'actionnement 12 monté à pivotement sur un support 14 autour d'un axe A. La commande de vol 10 comporte un premier organe de friction 16 solidaire du levier d'actionnement 12 et un second organe de friction 18 solidaire lui, du support 14 par l'intermédiaire d'une oreille de fixation 20. Le support 14 est ici recouvert d'un capot 22 que traverse le levier d'actionnement 12 en travers d'une lumière oblongue 24 qui autorise les mouvements du levier d'actionnement 12.

On détaillera tout d'abord en référence à la Figure 2 le premier organe de friction 16 monté solidaire du levier d'actionnement 12. Il comprend une pièce cylindrique 26 formant tambour, laquelle comprend un fond 28 et une partie ouverte 30 située en arrière de la Figure 2. En outre, la pièce cylindrique 26 comporte une partie cylindrique 31 et un épaulement périphérique de fixation 32 qui la borde. Dans cet épaulement périphérique de fixation 32, sont percés des orifices aptes à recevoir des vis 34. La partie cylindrique 31 est recouverte sur toute sa circonférence, d'une première portion d'appui 36 constituée d'une bande en matériau polymère et, plus précisément ici, d'une bande en polytétrafluoroéthylène, commercialisée sous la marque : « Teflon® ». Avantageusement, cette bande préformée 36 est collée sur la partie cylindrique 31.

En outre, cette partie cylindrique 31 peut aussi être revêtue d'un dépôt à base de polymère fluoré par exemple du polytétrafluoroéthylène. Ces polymères fluorés sont susceptibles d'être appliqués en couche mince sur la partie cylindrique 31. Pour ce faire, ils sont dispersés en phase liquide, par exemple sous forme de la forme de monomères, puis appliqués à l'état liquide sur la partie cylindrique 31, et ensuite réticulés à chaud pour former ladite couche mince solide.

On se référera maintenant à la Figure 3 sur laquelle est représenté le second organe de fixation 18 qui va venir enserrer le premier organe de friction 16 au niveau de sa partie cylindrique 31. Le second organe de friction 18 est constitué d'une bague fendue 38 présentant deux extrémités libres 40, 42 en regard l'une de l'autre. Ces dernières sont respectivement équipées d'un retour percé 44, 46 que traverse une vis de serrage 48. À l'opposé des extrémités libres 40, 42, s'étend l'oreille 20 en dehors de la bague. Cette oreille 20 présente un perçage 50 permettant de fixer la bague fendue 38 sur le support 14.

La bague fendue 38 présente une surface intérieure circulaire 52 recouverte d'une seconde portion d'appui 54 formée d'une bande d'un matériau polymère identique à celui de la première portion d'appui 36. Cette seconde portion d'appui 54 constitue une garniture, qui est ainsi réalisée en polytétrafluoroéthylène. Cette bande en matériau polymère, ou garniture, est avantageusement collée sur la surface intérieure circulaire 52. En outre, la vis de serrage 48 s'étend au-delà d'un des retours percés 44 pour emprisonner un ressort hélicoïdal de rappel 56 avec un écrou 58. De la sorte, les deux extrémités libres 40, 42 sont adaptées à être entraînées élastiquement l'une vers l'autre.

Bien évidemment, la surface intérieure circulaire 52 est susceptible d'être enduite d'une couche mince solide faite d'un polymère fluoré par exemple, selon un procédé analogue à celui décrit ci-dessus pour la partie cylindrique 31.

On se référera à nouveau à la Figure 1, sur laquelle la partie cylindrique 31 de l'organe de friction 16 est enserrée à l'intérieur de la bague fendue 38 du second organe de friction 18. Ainsi, la bague fendue 38 et maintenue en position fixe par rapport au support 14 grâce à son oreille 20, tandis que la pièce cylindrique 26 située à l'intérieur de la bague fendue 38, est elle solidaire du levier d'actionnement 12. En outre, les axes de symétrie de la pièce cylindrique 26 et de la bague fendue 38 sont confondus avec l'axe de rotation A du levier d'actionnement 12. De la sorte, lorsque le levier d'actionnement 12 est entraîné en pivotement, sur la Figure 1, dans le sens trigonométrique T, il entraîne par là même en rotation la pièce cylindrique 26 du premier organe de friction 16 dans le même sens trigonométrique, tandis que la bague fendue 38, du second organe de friction 18 demeure immobile. Par conséquent, la bande en matériau polymère de la première portion d'appui 36 est entraînée en rotation à l'intérieur de la bague fendue 38 et en frottement contre la garniture, en matériau polymère également, de la seconde portion d'appui 54. De la sorte, un couple de frottement résistif prend naissance dès que le levier d'actionnement 12 est entraîné en pivotement.

Par ailleurs, cet effort de frottement des portions d'appui 36, 54 l'une sur l'autre est maintenu constant grâce au ressort hélicoïdal de rappel 56, qui tend à rapprocher l'un de l'autre, les bords fibres 40, 42 de la bague fendue 38. De plus, grâce à la vis 48 et l'écrou 58, cet effort est susceptible d'être réglé en comprimant plus ou moins le ressort hélicoïdal de rappel 56.

Selon une alternative de réalisation de l'invention, la bague fendue 38 est aménagée pour supporter deux sabots diamétralement opposés qui forment ladite seconde portion d'appui. Les deux sabots sont alors réalisés dans un matériau polymère d'un même type, et sont adaptés à venir s'appliquer contre la partie cylindrique 31 recouverte de ladite première portion d'appui 36.

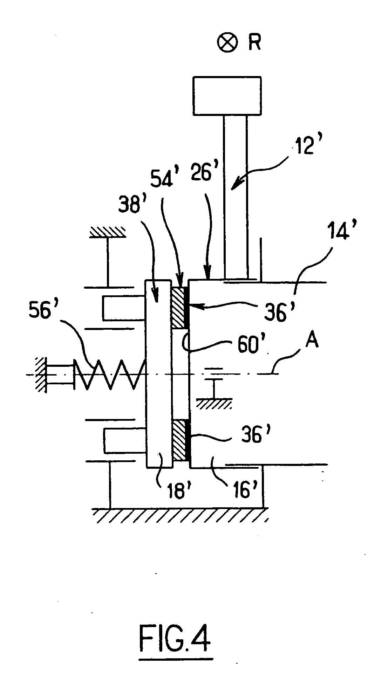

On se référera à présent à la Figure 4 sur laquelle est représentée une commande de vol, selon un second mode de mise en oeuvre.

Les éléments illustrés sur la Figure 4 présentant les mêmes fonctions que ceux des Figures précédentes sont repérés avec la même référence affectée d'un signe prime : « ' ».

Ainsi, on retrouve un levier d'actionnement 12' montés à rotation autour d'un axe A. Ce levier d'actionnement 12' est adapté à entraîner en rotation une pièce cylindrique 26' autour d'un élément support 14'. Cette pièce cylindrique 26' formant le premier organe de friction, présente un flanc 60', circulaire par nature, et plan, sur lequel est collée une première couronne formant une première portion d'appui 36'. On notera que la portion d'appui 36' peut aussi être constituée d'un disque en matériau polymère et qui recouvre entièrement le flanc 60'. Cette première couronne est réalisée dans un matériau polymère et en l'espèce, en potytétrafluoroéthylène.

En regard du flanc 60' de la pièce cylindrique 26' est installé un flasque 38' formant le second organe de friction et contre lequel est collée une seconde couronne formant une seconde portion d'appui 54'. Les deux couronnes 36' et 54' sont montées en appui l'une contre l'autre et le flasque 38' est maintenu à force vers le flanc 60' au moyen d'un ressort de rappel 56'. Par ailleurs, le flasque 38', les deux couronnes 54', 36' et la pièce cylindrique 26' présentent des axes de symétrie confondus avec l'axe A de pivotement du levier d'actionnement 12'

Ainsi, lorsque le levier d'actionnement 12' est entraîné en pivotement dans un sens R fuyant par rapport au plan de la Figure 4, la pièce cylindrique 26' et la première couronne 36' dont elle est solidaire sont entraînés en rotation dans le même sens, tandis que, la seconde couronne 54' et le flasque 38' dont elle est solidaire demeurent immobile. De la sorte, la première couronne 36' est entraînée en frottement contre la seconde couronne 54' avec un couple de friction qui dépend de l'effort exercé par le ressort de rappel 56' sur le flasque 38'.

En conséquence, l'entraînement du levier d'actionnement 12' offre une résistance mécanique donnée et constante.

Ainsi, grâce à l'utilisation des matériaux polymères, comme portion d'appui, et en particulier le polytétrafluoroéthylène dont les propriétés tribologiques demeurent constantes avec le temps, les sensations éprouvées au fil des manoeuvres du levier d'actionnement restent identiques.

Par ailleurs, les bandes en matériau polymère ou garniture, ou les couches minces solides précitées, peuvent être avantageusement renforcées par des charges de renfort telles que des fibres de verre ou bien des fibres de carbone. De plus, les matériaux polymères utilisés peuvent incorporer aussi des plastifiants ou des additifs facilitant leur mise en oeuvre et aussi leurs performances. De manière préférée, le polymère inclut du bisulfure de molybdène.

Selon encore un autre mode de mise en oeuvre, les organes de friction et les portions d'appui sont respectivement réalisées d'une seule pièce en matériau polymère et de préférence en polytétrafluoroéthylène.

## Revendications

1. Commande de vol (10) d'aéronef comprenant un levier d'actionnement (12, 12') manuel et un support (14, 14'), ledit levier d'actionnement manuel étant monté mobile sur ledit support, ladite commande de vol comprenant en outre un premier organe de friction (16, 16') solidaire dudit levier d'actionnement et un second organe de friction (18, 18') solidaire dudit support, lesdits organes de friction comportant chacun au moins une portion d'appui (36, 36' ; 54, 54'), les portions d'appui desdits organes de friction étant maintenues l'une contre l'autre pour opposer une résistance au mouvement dudit levier d'actionnement (12, 12') par rapport audit support (14, 14') ;
**caractérisée en ce que** lesdites portions d'appui (36, 36' ; 54, 54'), sont réalisées dans un même type de matériau polymère.

2. Commande de vol d'aéronef selon la revendication 1, **caractérisée en ce que** lesdites portions d'appui (36, 36' ; 54, 54'), sont réalisées dans un matériau polymère fluoré.

3. Commande de vol d'aéronef selon la revendication 1 ou 2, **caractérisée en ce que** lesdites portions d'appui (36, 36' ; 54, 54'), sont réalisées en polytétrafluoroéthylène.

4. Commande de vol d'aéronef selon l'une quelconque des revendications 1 à 3, **caractérisée en ce que** ledit levier d'actionnement (12,12') manuel est monté à pivotement sur ledit support (14, 14').

5. Commande de vol d'aéronef selon la revendication 4, **caractérisée en ce que** ledit premier organe de friction (16, 16') comporte une pièce cylindrique (26, 26') adaptée à être entraînée en rotation par ledit levier d'actionnement manuel.

6. Commande de vol d'aéronef selon la revendication 5, **caractérisée en ce que** la portion d'appui (36) dudit premier organe de friction (16) est formée d'une première bande qui est installée autour de ladite pièce cylindrique (26).

7. Commande de vol d'aéronef selon la revendication 6, **caractérisée en ce que** ledit second organe de friction (18) comprend une bague (38) apte à entourer ladite pièce cylindrique (26), ladite bague présentant une surface intérieure circulaire (52), ladite portion d'appui (54) dudit second organe de friction étant formée d'une seconde bande qui recouvre ladite surface intérieure circulaire.

8. Commande de vol d'aéronef selon la revendication 7, **caractérisée en ce que** ladite bague (38) présente des moyens de serrage (56) pour maintenir en appui ladite seconde bande contre ladite première bande.

9. Commande de vol d'aéronef selon la revendication 6, **caractérisée en ce que** ledit second organe de friction (18) comprend deux sabots diamétralement opposés formant ladite seconde portion d'appui.

10. Commande de vol d'aéronef selon la revendication 5, **caractérisée en ce que**, ladite pièce cylindrique (26') présentant un flanc (60'), ladite portion d'appui (36') dudit premier organe de friction (16') est formée d'une plaque installée sur ledit flanc.

11. Commande de vol d'aéronef selon la revendication 10; **caractérisée en ce que** ledit second organe de friction (16') comprend un flasque (38'), adapté à venir en regard dudit flanc (60') de ladite pièce cylindrique, la portion d'appui (54') dudit second organe de friction étant constituée d'une couronne installée contre ledit flasque.

12. Commande de vol d'aéronef selon la revendication 11, **caractérisée en ce que** ledit flasque (38') est entraîné par des moyens élastiques (56') vers ledit flanc de manière à porter en appui ladite couronne (54') contre ladite plaque (36').

## Claims

1. Aircraft flight control (10) comprising a manual actuation lever (12, 12') and a support (14, 14'), said manual actuation lever being movably mounted on said support, said flight control moreover comprising a first friction member (16, 16') integral with said actuation lever and a second friction member (18, 18') integral with said support, said friction members including each one at least a bearing portion (36, 36' ; 54, 54'), the bearing portions of said friction members being applied the one against the other in order to oppose a resistance to the movement of said actuation lever (12, 12') relative to said support (14, 14');
**characterized in that** said bearing portions (36, 36' ; 54, 54') are carried out from the same polymeric material type.

2. Aircraft flight control according to claim 1, **characterized in that** said bearing portions (36, 36'; 54, 54') are carried out from a fluorinated polymeric material.

3. Aircraft flight control according to claim 1 or 2, **characterized in that** said bearing portions (36, 36'; 54, 54') are carried out from polytetrafluoroethylene.

4. Aircraft flight control according to any of claims 1 to 3, **characterized in that** said manual actuation lever (12,12') is pivotally mounted on said support (14, 14').

5. Aircraft flight control according to claim 4, **characterized in that** said first friction member (16, 16') includes a cylindrical part (26, 26') fitted to be rotated by said manual actuation lever.

6. Aircraft flight control according to claim 5, **characterized in that** the bearing portion (36) of said first friction member (16) is made of a first band which is installed around said cylindrical part (26).

7. Aircraft flight control according to claim 6, **characterized in that** said second friction member (18) comprises a ring (38) able to surround said cylindrical part (26), said ring having a circular inner surface (52), said bearing portion (54) of said second friction member being made of a second band which overlays said circular inner surface.

8. Aircraft flight control according to claim 7, **characterized in that** said ring (38) includes tightening means (56) to apply said second band against said first band.

9. Aircraft flight control according to claim 6, **characterized in that** said second friction member (18) comprises two diametrically opposite shoes constituting said second bearing portion.

10. Aircraft flight control according to claim 5, **characterized in that**, said cylindrical part (26') having a flank (60'), said bearing portion (36') of said first friction member (16') is made of a plate provided on said flank.

11. Aircraft flight control according to claim 10, **characterized in that** said second friction member (16') comprises a flange (38'), adapted to come in front to said flank (60') of said cylindrical part, the bearing portion (54') of said second friction member being constituted of a crown installed against said flange.

12. Aircraft flight control according to claim 11, **characterized in that** said flange (38') is driven by elastic means (56') towards said flank so as to seat said crown (54") against said plate (36').

## Patentansprüche

1. Flugsteuerung (10) eines Flugzeuges umfassend einen manuellen Betätigungshebel (12, 12') und einen Halter (14, 14'), wobei der manuelle Betätigungshebel beweglich an dem Halter montiert ist, wobei die Flugsteuerung unter anderem ein erstes Reibungsorgan (16, 16'), das mit dem Betätigungshebel einteilig ausgebildet ist, und ein zweites Reibungsorgan (18, 18'), das mit dem Halter einteilig ausgebildet ist, umfasst, wobei die Reibungsorgane jeweils mindestens einen Stützbereich (36, 36'; 54, 54') aufweisen, wobei die Stützbereiche der Reibungsorgane gegeneinander gehalten werden, um einer Bewegung des Betätigungshebels (12, 12') gegenüber dem Halter (14, 14') einen Widerstand entgegenzusetzen, **dadurch gekennzeichnet, dass** die Stützbereiche (36, 36'; 54, 54') aus derselben Art eines Polymer-Materials realisiert sind.

2. Flugsteuerung eines Flugzeuges nach Anspruch 1, **dadurch gekennzeichnet, dass** die Stützbereiche (36, 36'; 54, 54') aus einem fluorisierten Polymer-Material realisiert sind.

3. Flugsteuerung eines Flugzeuges nach Anspruch 1 oder 2, **dadurch gekennzeichnet, dass** die Stützbereiche (36, 36'; 54, 54') aus Polytetrafluorethylen realisiert sind.

4. Flugsteuerung eines Flugzeuges nach einem der Ansprüche 1 bis 3, **dadurch gekennzeichnet, dass** der manuelle Betätigungshebel (12, 12') zum Schwenken an dem Halter (14, 14') montiert ist.

5. Flugsteuerung eines Flugzeuges nach Anspruch 4, **dadurch gekennzeichnet, dass** das erste Reibungsorgan (16, 16') ein zylindrisches Teil (26, 26') aufweist, das ausgelegt ist um durch den manuellen Betätigungshebel in Rotation gebracht zu werden.

6. Flugsteuerung eines Flugzeuges nach Anspruch 5, **dadurch gekennzeichnet, dass** der Stützbereich (36) des ersten Reibungsorgans (16) durch ein erstes Band gebildet ist, das um das zylindrische Teil (26) installiert ist.

7. Flugsteuerung eines Flugzeuges nach Anspruch 6, **dadurch gekennzeichnet, dass** das zweite Reibungsorgan (18) einen Ring (38) umfasst, der geeignet ist das zylindrische Teil (26) zu umgeben, wobei der Ring eine kreisförmige Innenoberfläche (52) aufweist, wobei der Stützbereich (54) des zweiten Reibungsorgans durch ein zweites Band gebildet ist, das die kreisförmige Innenoberfläche abdeckt.

8. Flugsteuerung eines Flugzeuges nach Anspruch 7, **dadurch gekennzeichnet, dass** der Ring (38) Klemmmittel (56) aufweist, um das zweite Band gegen das erste Band gedrückt zu halten.

9. Flugsteuerung eines Flugzeuges nach Anspruch 6, **dadurch gekennzeichnet, dass** das zweite Reibungsorgan (18) zwei Schuhe, die diametral gegeneinander versetzt sind, aufweist, die den zweiten Stützbereich bilden.

10. Flugsteuerung eines Flugzeuges nach Anspruch 5, **dadurch gekennzeichnet, dass** das zylindrische Teil (26') eine Flanke (60') aufweist, wobei der Stützbereich (36') des ersten Reibungsorgans (16') durch eine Platte, die an der Flanke installiert ist, gebildet wird.

11. Flugsteuerung eines Flugzeuges nach Anspruch 10, **dadurch gekennzeichnet, dass** das zweite Reibungsorgan (18') einen Flansch (38') umfasst, der ausgelegt ist bezüglich der Flanke (60') des zylindrischen Teils in Position zu kommen, wobei der Stützbereich (54') des zweiten Reibungsorgans durch einen Kranz gebildet ist, der gegen den Flansch installiert ist.

12. Flugsteuerung eines Flugzeuges nach Anspruch 11, **dadurch gekennzeichnet, dass** der Flansch (38') durch elastische Mittel (56') gegen die Flanke so gehalten ist, um den Kranz (54') gegen die Platte (36') zu drücken.
